# EUROPEAN PATENT SPECIFICATION

(11) **EP 1 770 106 B1**
(45) Date of publication and mention of the grant of the patent: **16.11.2011**
(21) Application number: 06019519.5
(22) Date of filing: 19.09.2006
(51) Int. Cl.: C08G 12/40, C09D 161/20, B32B 21/00, E04F 13/02, E04F 15/02

(54) **Modified aminoplast resin solution**
Modifizierte Aminoplastharzlösung
Solution de résine aminoplaste modifiée

(30) Priority: 29.09.2005 US 596509 P
(43) Date of publication of application: 04.04.2007
(73) Proprietor: INEOS Melamines GmbH, 60386 Frankfurt (DE)
(72) Inventor: Wonner, Johann, Dr., 64850 Schaafheim-Radheim (DE); Scholz, Wolfgang, Dr., 60594 Frankfurt am Main (DE); Wallenwein, Siegfried, 64574 Büttelborn (DE); Scholl, Frank, 61352 Bad Homburg (DE); Rottländer, Christian, Dr., 60435 Frankfurt am Main (DE)
(74) Representative: Deckers, Hellmuth Alexander

(56) References cited:
- EP-A- 1 445 992
- EP-A1- 0 379 100
- EP-A2- 0 251 081
- WO-A-82/02717
- DE-A1- 3 427 694
- DE-A1- 4 117 844

## Description

### Field of the invention

This invention relates to modified aminoplast resin solutions, the use thereof to provide antistatically modified laminate coatings for wood based materials, including coated fibre and particle boards used in furniture and flooring applications, and to a process for coating wooden boards, chip boards, particle boards and fibre boards of low, medium or high density.

### Background of the invention

A conventional flooring panel has the following structure (cf. US 6,568,148 B1):
an overlay paper which is a resin impregnated cellulosic sheet comprising alumina grit (particles of corundum), a decorative layer which consists of a printed paper layer impregnated with resin, a core made of a wood based material, such as a high density chip or fibre board, and a counteracting paper layer on the bottom side of the core to protect against warping.

Such panels, as well as those used for furniture applications such as table slabs, wall panels and furniture front panels have a propensity for electrostatic charging which leads to the deposition of dust on the surface, and can also have sizeable adverse influence on modern electronic equipment such as computers or measuring equipment upon electrical discharge. This electrostatic effect also significantly affects persons suffering from charging and subsequent discharging when walking such floors.

Addition of a variety of auxiliaries to flooring materials has been described to increase the conductivity thereof and thus reduce or avoid electrostatic charging. For instance, it has been known from EP 0 269 934 B1 to incorporate metal fibres into an epoxide resin layer to obtain an electrically conductive flooring material. In DE 101 15 567 C1, a method for suppression of accumulation of electrostatic charge is described which comprises coating the printed impregnated paper layer with a further layer of conductive polymers such as polyaniline or polypyrrole. Antistatic modification of the paper itself has been known from DE-OS 2258287 where quaternary ammonium compounds are used. Alkali or earth alkali salts, nitrates being explicitly mentioned, can be added to the coating to provide electrically conductive furniture panels or flooring slabs, as described in DE 103 01 770 A1.

Modification of only the surface seems more attractive than a homogeneous loading of conductive material in the flooring material itself because of the lower consumption of modifier, but the effect of surface modification wears off with each cleaning cycle, and adding salts such as quaternary ammonium compounds has been known to lead to transparency loss and a greyish tinge in the surface. Steam and dew resistance is also drastically impaired. Salts will generally negatively impact the properties of surfaces, in addition to being prone to be washed off upon cleaning which eventually leads to reduction or complete loss of electrical conductivity in the surface.

### Summary of the Invention

What is needed, therefore, is to provide a coating material which imparts good and lasting antistatic properties to wood based panels and slabs coated therewith, and an adapted process to coat such panels or slabs with the said coating materials. The coated panels and slabs shall not suffer from the shortcomings as described supra.

An object of the invention is therefore an aqueous resin solution S that comprises at least one aminoplast resin A, lithium sulphamate (sulfamic acid, lithium salt), and a curing agent C for the latter. The sulphamate is present in at least one form selected from the group consisting of (a) admixed to, and (b) cocondensed within, the at least one aminoplast resin. In paper impregnated with such solutions and subjected to curing thereafter, it has been found, surprisingly, that this salt is not washed out, or only washed out to an insignificant extent, upon cleaning, leaving the level of antistatic properties unimpaired even after 1000 cleaning cycles when the test was discontinued.

A further object of the invention is an aqueous resin solution S that comprises at least one aminoplast resin A, both an alkali or earth alkali sulphite or hydrogen sulphite, preferably lithium sulphite or hydrogen sulphite (sulphurous acid, dilithium or monolithium salt), and lithium sulphamate (sulfamic acid, lithium salt) which is cocondensed within, or admixed to, the at least one aminoplast resin, and a curing agent C for the at least one aminoplast resin. The sulphite or hydrogen sulphite is present in at least one form selected from the group consisting of (a) admixed to, and (b) cocondensed within, the at least one aminoplast resin. In paper impregnated with such solutions and subjected to curing thereafter, it has been found, surprisingly, that this salt is not washed out, or only washed out to an insignificant extent, upon cleaning, leaving the level of antistatic properties unimpaired even after 1000 cleaning cycles when the test was discontinued.

Any alkali or earth alkali salt of sulphurous acid or hydrogen sulphurous acid (also called sulfurous acid or hydrosulfurous acid, sulphite being used herein as the generic term for such salts encompassing both sulphites and hydrogen sulphites) can be used for the purpose of this invention, although the best results were obtained when using hydrogen sulphites where only one acidic hydrogen atom is replaced by a metal cation, and particularly, the lithium salt, which is therefore preferred.

Whenever reference to "sulphamate or sulphite" is made in this application, this is intended to mean "either sulphamate or sulphite, or both sulphamate and sulphite".

It has, however, also been found that the steam resistance of the surface is somewhat negatively influenced by addition of either or both of these salts to the overlay paper or to the decorative layer.

If the said antistatic agent, the lithium sulphamate, however, is used to modify an underlay which is applied beneath the printed impregnated paper layer directly on top of the chip or fibre board, it has surprisingly been found that although this underlay is isolated from the surface, the antistatic properties of the panels are retained while the water and steam resistance has the initial value of a non-modified surface.

A further object of the invention is therefore a coated wood particle board, especially a chip or fibre board, having on the one side next to the particle board, and beneath the printed impregnated paper that imparts the wood look, an underlay which is impregnated and/or coated with an aminoplast resin solution comprising the lithium sulphamate in admixed or cocondensed form, in a specific amount of substance (amount of substance of sulphamate, divided by mass of solid aminoplast resin; 1 hg = 100 g) of from 20 mmol/hg to 500 mmol/hg.

Another object of the invention is a coated wood particle board, especially a chip or fibre board, wherein the printed impregnated paper that imparts the wood look (decorative layer) has a coating, on the side facing the wood particle board, of a dried and cured aminoplast resin solution comprising the lithium sulphamate, in a specific amount of substance of preferably from 20 mmol/hg to 500 mmol/hg.

Another object of the invention is a process to make a coated wood particle board having antistatic properties which are not affected nor reduced by wet cleaning using aqueous cleaning solutions, comprising the steps of providing a wood particle board selected from the group consisting of chip broad, fibre boards, and preparing a laminate by pressing the said board with a decorative layer, and an overlay on top of that decorative layer, and preferably, a counteracting layer on the surface of the board which is opposite the decorative and overlay layers.

### Detailed Description of the Preferred Embodiments

The aqueous impregnating resin solution S that comprises lithium sulphamate may be selected from the group consisting of: (1) aqueous solutions containing an aminoplast resin A1, a curing agent C therefor, and lithium sulphamate cocondensed with, or admixed to, the aminoplast resin, and from (2) aqueous solutions containing the said curing agent C and a mixture which comprises the lithium sulphamate modified aminoplast resin A2 wherein at least a part, preferably at least 10 %, more preferably at least 25 %, and especially preferred, at least 40 % of the sulphamate groups are linked to an aminoplast former molecule by a methylene (-CH₂-) bridge or a methyleneoxy methylene (-CH₂-O-CH₂-) bridge connecting the sulphur atom of the sulphite or the nitrogen atom of the sulphamate group with an amino nitrogen atom of an aminoplast former molecule. The designation A1 is used herein to denote an aminoplast resin which is not modified with sulphamate. Additionally, sulphite can therefore be present in the solution
- as a salt admixed.

The aminoplast resin A is made in the usual way by reaction of formaldehyde with aminoplast formers selected from the group consisting of urea, thiourea, melamine, guanamines, and especially preferred among these, acetoguanamine, caprinoguanamine, and benzoguanamine, ethylene urea (2-imidazolidinone), propylene urea, and acetylene urea (glycol uril). Mixtures of aminoplast formers can also be used. Preferred resins are melamine-formaldehyde resins, especially those having a ratio of the amount of substance of formaldehyde to the amount of substance of amino groups in the aminoplast resin former of from 0.8 mol : 3 mol to 2.4 mol : 3 mol, preferably of from 1.0 mol : 3 mol to 2.2 mol : 3 mol, and especially preferred, from 1.2 mol : 3 mol to 2.0 mol : 3 mol. In the variant leading to aminoplast resin A2, which is made by cocondensation of lithium sulphamate with at least one aminoplast former and formaldehyde, the amount of substance of amino groups introduced by the sulphamate anion is also taken into account in calculating this ratio. Preferably, the aminoplast resins are not or only partly etherified with C₁- to C₄- aliphatic alcohols, to a degree not exceeding 40 % of the methylol groups formed by addition of formaldehyde to the aminoplast formers.

It is possible to use the inventive impregnation solution S to impregnate either the overlay layer, the decorative layer (printed paper), an underlay layer beneath the decorative or printed paper layer. It has also been found advantageous to apply the solution S with a doctor blade or similar equipment to the back of the decorative or printed paper layer, i. e. to the surface facing the board, not the overlay.

Surprisingly, if the antistatically modified resin solution S is applied to an underlay, or to the back of the decorative layer, a satisfactory antistatic effect is exhibited while retaining the good and unimpaired surface properties. Particularly, the steam resistance is not reduced in comparison with an unmodified aminoplast resin/curing agent combination.

As is well known to the person skilled in the art, the first step in the preparation of a coating composition is providing an impregnating solution. This solution is usually a mixture of an aqueously dispersed aminoplast resin, such as a melamine resin, a curing agent therefor, and a selection of additives such as wetting agents and release agents, and possibly defoamers or further additives. This solution is used to impregnate paper (decorative paper, overlay or underlay), which impregnated paper is then dried to a residual humidity that allows press forming after drying. The impregnated paper is applied to panels or slabs such as those mentioned supra, by pressing, or a plurality of such paper layers are pressed together to form a multi-layer material which is then applied to a carrier. A counteracting paper layer is preferably applied to the bottom side of the multilayer material to protect against warping. These materials are used to produce furniture, flooring, etc.

A promising alternative to the use of an underlay is coating the surface of the decorative layer facing away from the upper surface (i. e. the surface adjacent to the board) with a resin solution comprising the alkali or earth alkali, preferably lithium, sulphamate or sulphite, either in added (admixed) or cocondensed form. While it had been found in the initial experiments that when using equivalent quantities of the alkali or earth alkali, preferably lithium, sulphamate or sulphite, in the resin used for coating the adverse side of the decorative layer as in the impregnating resins, the surface resistance realised by such embodiment was higher than that if the decorative paper layer was impregnated, there were also adhesion problems when pressing laminates comprising HDF boards, which showed as blisters after pressing. This problem was solved in the present invention by addition of cellulosic fibres to the resin solution, preferably in a mass fraction of from 5 % to 20 % of the mass of the aminoplast resin. It has been found, surprisingly, that such addition of cellulosic fibres does not only solve the adhesion problem, but also leads to a more uniform layer thickness of the coating and a reduced surface resistance.

The invention is further illustrated by the following examples which shall not be construed as limiting.

### Examples

### Impregnating solutions

### Example 1 Standard Impregnating Solution

806.5 g of an aqueously dispersed non-etherified melamine resin having a mass fraction of solids of 62 % (62 % strength), approximately 55 % of its mass being a mononuclear melamine resin, approximately 25 % of it being a dinuclear melamine resin, the residue being tri- or polynuclear, were mixed with 193.5 g of fully deionised water, 2.0 g of a wetting agent based on sulphonated fatty acids (^{®}Hypersal XT 793, Ineos Melamines GmbH), 1.0 g of a release agent based on fatty acid and organic phosphates (^{®}Madurit TM 3750, Ineos Melamines GmbH), and 4.5 g of a curing agent (an amine salt of toluene sulphonic acid, ^{®}MADURIT-HAERTER MH 835/70WA, Ineos Melamines GmbH).

### Example 2 Modified Impregnating Solution (Addition of 60 mmol of Li Sulphamate per 100 g of Resin Solution of 62 % strength)

Example 1 was repeated, wherein 50.0 g of lithium sulphamate were added to the mixture

### Reference Example 2a Modified Impregnating Solution (Addition of 60 mmol of Li Hydrogen Sulphite per 100 g of Resin Solution of 62 % strength)

Example 1 was repeated, wherein 71.2 g of lithium hydrogen sulphite in the form of a 60 % strength aqueous solution were added to the mixture. The aqueous solution was obtained by absorption of gaseous SO₂ in an aqueous solution of lithium hydroxide.

### Example 3 Modified Impregnating Solution (Addition of 100 mmol of Li Sulphamate per 100 g of Resin Solution of 62 % strength)

Example 1 was repeated, wherein 83.1 g of lithium sulphamate were added to the mixture.

### Example 4 Potential Test

Paper sheets for decorative (printed paper, 80 g/m², mass fraction of resin in the impregnated paper 52 %) and overlay layers (40 g/m², mass fraction of resin in the impregnated paper 70 %) were impregnated with the impregnating solutions of Example 1 and Example 2. The impregnated paper sheets were pressed onto medium density fibre board (MDF) panels to form
- **a standard test panel** comprising the fibre board, a decorative layer, and an overlay on one side of the board, and a counteracting layer on the opposite face of the board, both the decorative layer and the overlay being impregnated with the standard impregnating solution of Example 1, and
- **test panel A** comprising the fibre board, a decorative layer, and an overlay on one side of the board, and a counteracting layer on the opposite face of the board, the decorative layer being impregnated with the modified impregnating solution of Example 2 and the overlay being impregnated with the standard impregnating solution of Example 1, and
- **test panel A'** comprising the fibre board, a decorative layer, and an overlay on one side of the board, and a counteracting layer on the opposite face of the board, the decorative layer being impregnated with the modified impregnating solution of Reference Example 2a and the overlay being impregnated with the standard impregnating solution of Example 1.

The electric potential was measured for all panels in a walk test according to DIN EN 1815, at 23 °C and a relative humidity of 25 %, with the support for the panels being either isolated (I) or moderately conducting (C). Shoe soles were made of PVC, and rubber, respectively. The results are summarised in table 1.

**Table 1: Electric Potential (DIN EN 1815)**

| **Test Panels** | **Support** | **Potential in kV PVC** | **Potential in kV Rubber** |
|---|---|---|---|
| Standard Test Panel | I | 3.0 | 3.6 |
| Standard Test Panel | C | 4.4 | 4.8 |
| Test Panel A | I | 1.2 | 1.7 |
| Test Panel A | C | 1.0 | 1.6 |
| Test Panel A' | I | 1.3 | 1.9 |
| Test panel A' | C | 1.2 | 1.8 |

Test panel A which was prepared using the lithium sulphamate modified impregnating solution of Example 2 for the decorative layer developed an electric potential in the test which was only one third to one half of that of the standard panel, the results with the panel A being well below the rated value of at most 2 kV. Similar results were obtained with test panel A'.

### Example 5 Surface Resistance Test

A modified impregnating solution comprising lithium sulphamate in different concentrations was used in an underlay (28 g/m², mass fraction of resin in the impregnated paper 70 %), i. e. between a chip board and the decorative layer. The surface resistance was measured in comparison to a standard panel.
The test panels were:
- **Standard panel**: Chip board with a decorative layer, an overlay, and a counteracting layer, both decorative and overlay layer impregnated with the impregnating solution of Example 1.
- **test panel B**: Chip board with an underlay, a decorative layer, an overlay, and a counteracting layer, both decorative and overlay layer impregnated with the impregnating solution of Example 1, and the underlay impregnated with the impregnating solution of Example 2.
- **test panel C**: Chip board with an underlay, a decorative layer, an overlay, and a counteracting layer, both decorative and overlay layer impregnated with the impregnating solution of Example 1, and the underlay impregnated with the impregnating solution of Example 3.

Surface resistances measured on the standard panel, and test panels B and C are shown in table 3. It can be deducted that modification of the impregnating solution with lithium sulphamate addition leads to markedly reduced surface resistance.

**Table 2: Surface Resistance Measurement**

| **Test Panels** | **Surface Resistance in GΩ** |
|---|---|
| Standard Test Panel | 32 |
| Test Panel B | 4 |
| Test Panel C | 2 |

### Example 6 Melamine Resin Solution with Cocondensed Lithium Sulphamate

A melamine formaldehyde resin having a mass fraction of solids of 62.3 % and a viscosity of 196 mPa·s at 23 °C was prepared that comprised lithium sulphamate in cocondensed form (amount of substance of cocondensed lithium sulphamate in the resin solution: 60 mmol/hg), with a ratio of the amount of substance of formaldehyde to the sum of the amounts of substance of melamine and one third of that of lithium sulphamate of 1.5 mol : 1 mol.

### Reference Example 6a Melamine Resin Solution with Cocondensed Lithium Hydrogen Sulphite

A melamine formaldehyde resin having a mass fraction of solids of 60.2 % and a viscosity of 190 mPa·s at 23 °C was prepared that comprised lithium hydrogen sulphite in cocondensed form (amount of substance of cocondensed lithium hydrogen sulphite in the resin solution: 60 mmol/hg), with a ratio of the amount of substance of formaldehyde to the sum of the amounts of substance of melamine and one third of that of lithium hydrogen sulphite of 1.5 mol : 1 mol.

### Example 7 Surface Resistance Test

A test panel D was prepared according to the procedure used for test panel C, but in this case, the melamine resin solution of Example 6 was used to impregnate the underlay. The surface resistance was measured, in comparison to a standard test panel (see Example 5). The results obtained are summarised in Table 3.

### Reference Example 7a Surface Resistance Test

A test panel D' was prepared according to the procedure used for test panel C, but in this case, the melamine resin solution of Reference Example 6a was used to impregnate the underlay. The surface resistance was measured, in comparison to a standard test panel (see Example 5). The results obtained are summarised in Table 3.

**Table 3: Surface Resistance Measurement**

| **Test Panels** | **Surface Resistance in GΩ** |
|---|---|
| Standard Test Panel | 32 |
| Test Panel D | 5 |
| Test Panel D' | 8 |

### Example 8 Cellulose- and Lithium Sulphamate Modified Resin Solution

An impregnating solution was prepared by mixing 806.5 g of the melamine resin solution of Example 1, 290.3 g of an 50 % strength aqueous solution of lithium sulphamate (mass fraction of salt in the solution: 50 g / 100 g), 106.5 g of alpha-cellulose fibres (bulk density 1500 kg/m³, length 40 µm, thickness 20 µm; ^{®}Arbocel BE 600/30, J. Rettenmaier & Söhne, D-73494 Rosenberg), 2.0 g of the wetting agent, 1.0 g of the release agent, and 7.5 g of the curing agent each of Example 1.

### Example 9

Paper sheets for decorative (printed paper, 80 g/m²) and overlay layers (40 g/m²) were impregnated with the impregnating solutions of Example 1. The mass fractions of resin in the impregnated paper were as in Example 4. The decorative layer used for test panel E was additionally coated on the surface facing the fibre board using a 100 µm doctor blade with the impregnating solution of Example 8 to yield a mass fraction of total resins in the coated decorative layer of approximately 65 %. The impregnated paper sheets were pressedonto high density fibre board (HDF) panels to form
- **a standard test panel** comprising a high density fibre board, a decorative layer, and an overlay on one side of the board, and a counteracting layer on the opposite face of the board, both the decorative layer and the overlay being impregnated with the standard impregnating solution of Example 1, and
- **test panel E** comprising the fibre board, a decorative layer, and an overlay on one side of the board, and a counteracting layer on the opposite face of the board, the decorative layer being impregnated with the impregnating solution of Example 1, and coated on the surface facing the fibre board as detailed supra, with the resin solution of Example 8, and the overlay being impregnated with the standard impregnating solution of Example 1.

The electric potential was measured for both panels in a walk test according to DIN EN 1815, at 23 °C, and a relative humidity of 25 %, with the support for the panels being either isolated (I) or moderately conducting (C). Shoe soles were made of PVC, and rubber, respectively. The results are summarised in table 4.

**Table 4: Electric Potential (DIN EN 1815)**

| **Test Panels** | **Support** | **Potential in kV PVC** | **Potential in kV Rubber** |
|---|---|---|---|
| Standard Test Panel | I | 4.8 | 5.3 |
| Standard Test Panel | C | 4.2 | 4.8 |
| Test Panel E | I | 0.7 | 0.5 |
| Test Panel E | C | 0.9 | 0.3 |

Test panel E developed an electric potential in the test which was only one sixteenth to one sixth of that of the standard panel, the results with the panel E being far below the rated value of at most 2 kV.

### Example 10 Melamine Resins with Cocondensed Sodium and Lithium Sulphamates

A modified melamine resin solution 10a was prepared by mixing 21 g of fully deionised water, 198 g of formaldehyde (paraform, mass fraction of formaldehyde of 91 %), 2 ml of dilute sodium hydroxide solution in water (amount of substance concentration of sodium hydroxide in the solution of 2 mol/l), 1486.4 g of a 50 % strength solution of sodium sulphamate in water (mass fraction of sodium sulphamate in the solution is 50 cg/g), and 252.2 g of melamine, and heating within thirty minutes to about 70 °C, increasing the temperature during further sixty minutes to 90 °C, and stirring at that temperature for about six hours. The reaction mixture was then cooled with a rate of -0.4 K/min to 55 °C, then with a rate of - 0.2 K/min top 30 °C. pH was between 6 and 8 during this reaction. The mass fraction of sodium sulphamate in the resin solids was 63.2 %.

A further modified melamine resin solution **10b** was prepared by mixing 11.8 g of fully deionised water, 921.6 g of formaldehyde (formalin, mass fraction of formaldehyde of 39.1 %), 4 ml of dilute sodium hydroxide solution in water (amount of substance concentration of sodium hydroxide in the solution of 2 mol/l), 2143.8 g of a 51.52 % strength solution of lithium sulphamate in water (mass fraction of lithium sulphamate in the solution is 51.52 cg/g), and 504.4 g of melamine, and heating within thirty minutes to about 70 °C, increasing the temperature during further sixty minutes to 90 °C, and stirring at that temperature for about six hours. The reaction mixture was then cooled with a rate of -0.4 K/min to 55 °C, then with a rate of - 0.2 K/min top 30 °C. pH was between 6 and 8 during this reaction. The mass fraction of lithium sulphamate in the solids was 56 %.

From these resin solutions, impregnating solutions **10aa** and **10bb** were prepared by mixing 150 g of the resin solution 10a with 22 g of the cellulosic fibres as mentioned in Example 8, and 1.83 g of the curing agent as in Example 1, to yield impregnating solution **10aa,** and by mixing 150 g of the resin solution **10b** with 21 g of the cellulosic fibres as mentioned in Example 8, and 1.89 g of the curing agent as in Example 1, to yield impregnating solution **10bb.**

Example 9 was repeated, but in this case, the decorative layers used for test panels F and G were coated with the impregnating solutions **10aa** and **10bb** instead of the impregnating solution of Example 8, using a 30 µm doctor blade. The impregnated paper sheets were pressed onto high density fibre boards as described in Example 9, and the test panels F and G this prepared were tested against a standard test panel for their surface resistance, with the result as listed in table 5:

**Table 5: Test Results**

| **Test Panel** | **Surface Resistance in G Ω** |
|---|---|
| Standard Test Panel | 33 |
| Test Panel G (Li-Sulphamate) | 4 |
| Test Panel F (Na-Sulphamate) | 7 |

Using isolating and conductive supports in each case, the electric potentials were measured in a walk test according to DIN EN 1815, at 23 °C, and a relative humidity of 25 %, with the support for the panels being either isolated (I) or moderately conducting (C). Shoe soles were made of PVC, and rubber, respectively. The results are summarised in table 6.

**Table 6: Electric Potential**

| **Test Panel** | **Support** | **Potential in kV (PVC)** | **Potential in kV (Rubber)** |
|---|---|---|---|
| Standard Test Panel | I | 3.7 | 8.1 |
| Standard Test Panel | C | 5.1 | 7.0 |
| Test Panel G | I | 0.1 | 1.4 |
| Test Panel G | C | 0.3 | 0.9 |
| Test Panel F | I | 0.4 | 1.6 |
| Test Panel F | C | 0.9 | 1.3 |

It can be easily seen that in both cases, there is a marked reduction of the surface resistance, and similarly, the electric potential for resins containing cocondensed sulphamates, the effect being more pronounced with the lithium salt compared with the sodium salt.

### Example 11

From the resin solution **10b** of Example 10 comprising cocondensed lithium sulphamate, and the melamine resin solution of Example 1, the following impregnating solutions were prepared for testing:

**Table 7: Composition of Impregnating Solutions (masses in g)**

| component (mass in g) | **11a** | **11b** | **11c** | **11d** |
|---|---|---|---|---|
| Melamine resin solution of Ex. 1 | | 100 | | 100 |
| resin solution 10 b | 100 | | 100 | |
| cellulose fibres of Ex. 8 | 13.3 | 22.5 | 0 | 0 |
| lithium nitrate | 0 | 63.3 | 0 | 63.3 |
| curing agent of Example 1 | 1.22 | 0.56 | 1.22 | 0.56 |

According to the compositions as laid down in the table supra, an impregnating solution **11a** comprising a melamine resin with cocondensed lithium sulphamate, a curing agent, and cellulosic fibres, a similar impregnating solution **11c** without such cellulosic fibres, an impregnating solution **11b** prepared from the melamine resin solution of Example 1, added lithium nitrate, a curing agent, and cellulosic fibres, and a similar impregnating solution **11d** without such cellulosic fibres were prepared.

Test panels H, I, J, and K were prepared as in Example 10 using also a 30 µm doctor blade to additionally coat the decorative layer on the side facing the fibre board with the impregnating solutions **11a** (panel H), **11b** (panel I), **11c** (panel J) and **11d** (panel K). The following results were found, in comparison to a standard test panel as described in Example 1:

**Table 8: Comparative Testing**

| **Test Panel** | **Surface Appearance** | **Surface Resistance in GΩ** |
|---|---|---|
| Standard | slightly grey, no cracks | 30 |
| H | slightly grey, no cracks | 7 |
| I | grey, 3 small cracks | 6 |
| J | slightly grey, 4 small cracks, 2 large cracks | 8 |
| K | grey, 16 small cracks, 4 large cracks | 7 |

It can be seen that the presence of cellulosic fibres has a beneficial effect on the surface appearance, that the presence of free salts impairs the colour and leads to crack formation in the surface, and that both cocondensed and free lithium salts drastically lower the surface resistance. While the decrease of surface resistance is slightly higher in the case of free lithium salt, this advantage is easily lost as already a few exposure cycles to humidity or water apparently wash out the salt so that the surface resistance increases again. In the case of the cocondensed lithium salt, there is no loss in conductivity seen in such exposure, as witnessed by the constant low surface resistance.

## Claims

1. A process to reduce the surface resistance of laminates, such laminates comprising an overlay paper which is a resin impregnated cellulosic sheet, a decorative layer which is a printed paper layer impregnated with a resin, and a core made of a wood based material which is a chip or fibre board, such process comprising impregnating at least one layer which is laminated to the surface of the board facing the use side of the said laminates, with an aqueous resin solution S that comprises at least one aminoplast resin **A**, lithium sulphamate which lithium sulphamate is cocondensed within, or admixed to, the at least one aminoplast resin A, and a curing agent C for the at least one aminoplast resin **A**.

2. The process of claim 1 wherein the decorative paper layer is impregnated with the aqueous resin solution **S**.

3. The process of claim 1 wherein an additional layer is placed between the board and the decorative layer, said additional layer being impregnated with the aqueous resin solution S.

4. The process of claim 1 wherein the surface of the decorative layer which is facing the board is coated with the aqueous resin solution **S**.

5. The process of claim 4 wherein cellulosic fibres are added to the aqueous resin solution S before coating the same onto the surface of the decorative layer.

6. The process of any of the preceding claims 1 to 5 wherein the aqueous resin solution S comprises a lithium sulphamate modified aminoplast resin **A2** wherein at least a part of the sulphamate groups are linked to an aminoplast former molecule by a methylene (-CH₂-) bridge or a methyleneoxy methylene (-CH₂-O-CH₂-) bridge connecting the nitrogen atom of the sulphamate group with an amino nitrogen atom of an aminoplast former molecule.

7. Antistatic laminates made by the process of claim 1.

8. Antistatic laminates made by the process of claim 2.

9. Antistatic laminates made by the process of claim 3.

10. Antistatic laminates made by the process of claim 4.

11. Antistatic laminates made by the process of claim 5.

12. Antistatic laminates made by the process of claim 6.

## Patentansprüche

1. Verfahren zur Verminderung des Oberflächenwiderstands von Laminaten, wobei die Laminate ein Overlay-Papier umfassen, das ein mit Harz imprägniertes Zellstoff-Blatt ist, eine Dekorschicht, die eine mit Harz imprägnierte bedruckte Papierlage ist, sowie einen Kern aus einem auf Holz basierenden Material, der eine Platte aus Holzschnitzeln oder -fasern ist, und wobei das Verfahren das Imprägnieren von mindestens einer Lage umfasst, die auf die der Nutzungsoberfläche des Laminats zugewandten Oberfläche der Platte laminiert ist, mit einer wäßrigen Harzlösung S, die mindestens ein Aminoplastharz **A**, Lithiumsulfamat, wobei das Lithiumsulfamat mit dem mindestens einen Aminoplastharz **A** cokondensiert oder diesem zugemischt ist, und ein Härtungsmittel C für das mindestens eine Aminoplastharz **A** umfasst.

2. Verfahren nach Anspruch 1, bei dem das Dekorpapier mit der wässrigen Harzlösung S imprägniert wird.

3. Verfahren nach Anspruch 1, bei dem eine zusätzliche Lage zwischen die Platte und die Dekorschicht eingebracht wird, wobei die zusätzliche Schicht mit der wässrigen Harzlösung S imprägniert wird.

4. Verfahren nach Anspruch 1, bei dem die Oberfläche der Dekorschicht, die der Platte zugewandt ist, mit der wässrigen Harzlösung S imprägniert wird.

5. Verfahren nach Anspruch 4, wobei der wässrigen Harzlösung **S** Cellulosefasern zugesetzt werden, bevor sie auf die Oberfläche der Dekorschicht aufgetragen wird.

6. Verfahren nach einem der vorangehenden Ansprüche 1 bis 5, bei dem die wässrige Harzlösung S ein mit Lithiumsulfamat modifiziertes Aminoplastharz **A2** umfasst, bei dem mindestens ein Teil der Sulfamatgruppen mit dem Aminoplastbildnermolekül durch eine Methylenbrücke -CH₂- oder eine Methylenoxymethylenbrücke -CH₂-O-CH₂- verbunden ist, die das Stickstoffatom der Sulfamatgruppe mit einem Amino-Stickstoffatom eines Aminoplastbildnermoleküls verknüpft.

7. Antistatische Laminate hergestellt durch das Verfahren gemäß Anspruch 1.

8. Antistatische Laminate hergestellt durch das Verfahren gemäß Anspruch 2.

9. Antistatische Laminate hergestellt durch das Verfahren gemäß Anspruch 3.

10. Antistatische Laminate hergestellt durch das Verfahren gemäß Anspruch 4.

11. Antistatische Laminate hergestellt durch das Verfahren gemäß Anspruch 5.

12. Antistatische Laminate hergestellt durch das Verfahren gemäß Anspruch 6.

## Revendications

1. Un procédé pour diminuer la résistance superficielle d'un aggloméré stratifié qui est constitué d'un papier overlay qui est une couche cellulosique imprégnée, d'un revêtement décoratif qui est un papier imprimé et imprégné avec une résine, et d'une âme à base de bois issue d'un panneau dérivé bois de type particule ou fibre, ce procédé comprenant l'imprégnation d'au moins une couche qui est stratifiée sur la surface du panneau orientée vers le côté usure, par une solution aqueuse S de résine qui est constituée d'au moins une résine amino A, du sel de lithium et de l'acide amidosulfonique, ce sel de lithium et de l'acide amidosulfonique étant cocondensé avec, ou ajouté à, au moins une résine amino **A**, et un agent durcisseur C pour la résine amino **A**.

2. Procédé selon la revendication 1, **caractérisé en ce que** le revêtement décoratif est imprégné par la solution aqueuse S de résine.

3. Procédé selon la revendication 1 **caractérisé en ce que** une couche supplémentaire est placée entre le panneau et le revêtement décoratif, cette couche supplémentaire étant imprégnée par la solution aqueuse S de résine.

4. Procédé selon la revendication 1 **caractérisé en ce que** la surface du revêtement décoratif orientée vers le panneau est revêtue par la solution aqueuse S de résine.

5. Procédé selon la revendication 4 **caractérisé en ce que** des fibres cellulosiques sont ajoutées à la solution aqueuse S de résine avant d'en revêtir la surface du revêtement décoratif.

6. Procédé selon quelconque des revendications 1 à 5 **caractérisé en ce que** la solution aqueuse S de résine est constituée d'une résine amino **A2** modifiée par du sel de lithium et de l'acide amidosulfonique, les groupes amidosulfoniques étant au moins partiellement relié à une molécule de générateur d'aminoplastes par une liaison méthylène -CH₂- ou une liaison méthylèneoxy méthylène -CH₂O-CH₂- liant l'atome azote du groupe amidosulfonique à un atome azote aminique d'une molécule de générateur d'aminoplastes.

7. Stratifié antistatique fabriqué par le procédé selon la revendication 1.

8. Stratifié antistatique fabriqué par le procédé selon la revendication 2.

9. Stratifié antistatique fabriqué par le procédé selon la revendication 3.

10. Stratifié antistatique fabriqué par le procédé selon la revendication 4.

11. Stratifié antistatique fabriqué par le procédé selon la revendication 5.

12. Stratifié antistatique fabriqué par le procédé selon la revendication 6.
